# EUROPEAN PATENT SPECIFICATION

(11) **EP 2 123 365 B1**
(45) Date of publication and mention of the grant of the patent: **11.01.2012**
(21) Application number: 08721362.5
(22) Date of filing: 05.03.2008
(51) Int. Cl.: B05B 12/00, B05B 13/04, B25J 5/02, B25J 9/00

(54) **PAINTING SYSTEM**
ANSTREICHSYSTEM
SYSTEME DE PEINTURE

(30) Priority: 08.03.2007 JP 2007058231; 20.07.2007 JP 2007189428
(43) Date of publication of application: 25.11.2009
(60) Divisional application: 11166587.3
(73) Proprietor: Kabushiki Kaisha Yaskawa Denki, Kitakyushu-shi, Fukuoka 806-0004 (JP)
(72) Inventor: YOSHINO, Katsuhiko c/o Kabushiki Kaisha Yaskawa Denki, 806-0004 Fukuoka (JP); TAKAHASHI, Shingi c/o Kabushiki Kaisha Yaskawa Denki, 806-0004 Fukuoka (JP)
(74) Representative: Uchida, Kenji
(86) International application number: PCT/JP2008/053942
(87) International publication number: WO 2008/108401

(56) References cited:
- EP-A1- 1 609 532
- WO-A1-03/021519
- FR-A1- 2 806 012
- GB-A- 2 114 024
- JP-A- 08 164 349
- JP-A- 2000 167 451
- JP-U- 62 087 769
- US-A1- 2006 292 308
- US-A1- 2006 292 308

## Description

### Technical Field

The present invention relates to a painting system that paints automobiles using painting robots in a painting booth.

### Background Art

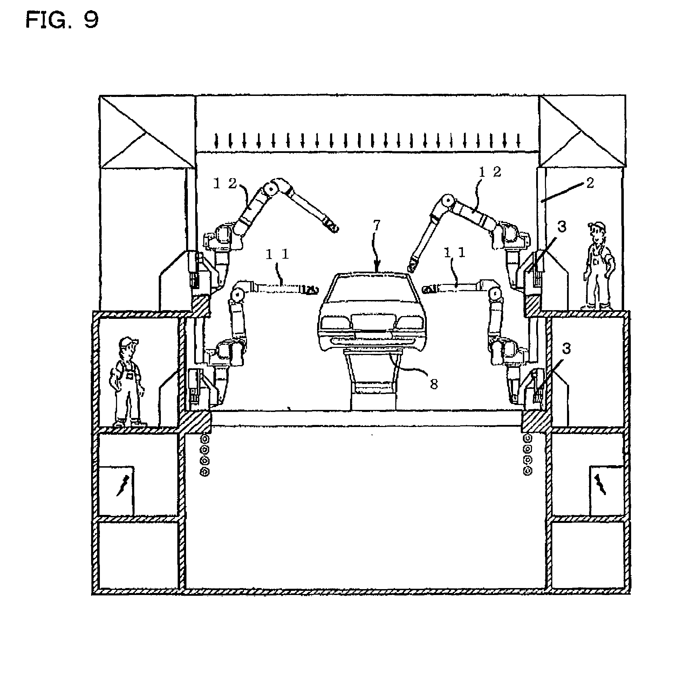

Among existing painting systems, a type of painting system having a painting robot and a door opening/closing robot disposed on two travel guide rails provided at different heights on a side wall of a painting booth has been proposed (see, for example, Patent Document 1 and Patent Document 2).
Referring to Fig. 9, a first example of existing painting systems is described. An automotive body 7 is placed on a conveyer 8 and moved to a painting booth 2. Travel guide rails 3 are attached to side walls of the painting booth 2. Door opening/closing robots 11 and painting robots 12 are attached to the travel guide rails 3 so as to paint the automotive body 7. The door opening/closing robots 11 and the painting robots 12 are attached to the travel guide rails 3 disposed at different heights in the vertical direction so that the door opening/closing robots 11 and painting robots 12 can pass each other without interfering with each other. In this example of the existing art, the painting robots 12 are disposed on the travel guide rails 3 in an upper level, and the door opening/closing robots 11 are disposed on the travel guide rails 3 in a lower level.

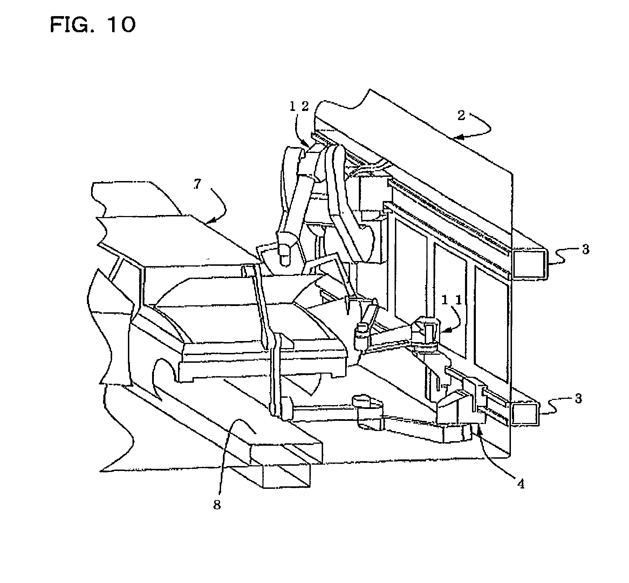

Referring to Fig. 10, a second example of existing painting systems is described. An automotive body 7 is placed on a conveyer 8 and moved to a painting booth. Travel guide rails 3 are attached to a side wall of the painting booth. Door opening/closing robots 4, 11 and a painting robot 12 are attached to the travel guide rails so as to paint the automotive body 7. The door opening/closing robots 4, 11 and the painting robot 12 are attached to the travel guide rails 3 provided at different heights in the vertical direction so that the door opening/closing robots 4, 11 and the painting robot 12 can pass each other without interfering with each other. In this example, the painting robot 12 is disposed on a travel guide rail 3 in an upper level, and the door opening/closing robots 4,11 are disposed on the travel guide rail 3 in a lower level.
Similar systems are known from Patent documents WO2001/68267, WO2005/46880, EP 1609532 A1, FR2806012 A1, US 2006/292308 A1. Furthermore, a stationary combined opening/closing/painting robot is known from document GB2114024 A.

### Disclosure of Invention

### Problems to be Solved by the Invention

For a painting system, reduction of the size of a painting booth and reduction of the number of robots have been desired. While painting is being performed, the painting booth is usually air conditioned such that air flows downward. A large painting booth requires a high flow rate, which causes a problem of high operating costs for air-conditioning equipment. Therefore, there has been a trend toward reducing the size of the painting booth so as to reduce the operating costs for the air-conditioning equipment.
In order to reduce the size of the painting booth, either the number of robots has to be reduced or the robots have to be disposed with high density. In order to paint an automotive body, two door opening/closing robots and a painting robot are necessary, as disclosed in the example of the existing painting systems. The robots are disposed in upper and lower levels, so that the robots are disposed with high density.
However, existing painting systems have the following problems. First, with a structure in which a painting robot is disposed on a travel guide rail in an upper level and a door opening/closing robot is disposed on a travel guide rail in a lower level, paint ejected from the painting robot is sprayed onto an automotive body and, in addition, as air flows downward in the painting booth, paint that is not sprayed onto the automotive body may adhere to the door opening/closing robot in the lower level. In such a case, a problem occurs in that a wrong color may adhere to a door when an opening/closing section of the door opening/closing robot contacts the door. In order to prevent the adherence of a wrong color, daily maintenance is necessary, which causes a problem of serviceability. Moreover, during a continuous painting process, it is necessary to check whether a smear is spreading on the opening/closing section of the door opening/closing robot and perform maintenance so as to remove the smear. A downtime required for the maintenance may interrupt a continuous painting process of several hundred vehicle bodies, which causes a problem of lowered productivity.
Second, an example of existing painting systems is described to have a structure in which one painting robot and two door opening/closing robots are disposed on a wall on one side of a painting booth. In order to paint the inside of a door, a trunk, and a front body with one painting robot, the painting robot should have a longest degree of extension that enables painting of the trunk and the front body, which requires a considerably long arm length. On the other hand, in order to paint the door, the painting robot may have to retract an arm to such an extent that it is outside the range of motion. Consequently, a large distance between the automotive body and the wall of the painting booth is required. Thus, the painting booth has to be large and air-conditioning equipment has to have a high flow rate, which causes a problem in that a desired painting system cannot be provided. Even if the arm can be moved so that the arm can paint the door, performing painting with one robot requires a long time, which causes a problem in that productivity is reduced. In this case, the existing painting system supposedly employs an additional painting robot so as to effectively perform painting operations. However, this contradicts an original object of reducing the number of robots, which causes a problem in that a desired painting system is not provided.
The present invention, which has been achieved so as to address these problems, provides a painting system that optimizes the number and the disposition of robots in a painting booth and thereby improves productivity.

### Means for Solving the Problems

To solve the problem, the present invention provides a painting system according to claim 1.

### Advantages

According to the invention described in Claim 1, the following advantages are gained.
First, the disposition and the number of the robots are optimized, so that the size of the painting booth and the size of the air-conditioning equipment are reduced.
The opener robot and the door opening/closing/painting robot are disposed in the upper level and the painting robot is disposed in the lower level of the travel guide rail, so that, even when air flows downward in the painting booth, the opening/closing section that opens and closes a trunk and a door is prevented from being painted and a wrong color is prevented from adhering to the article, which eliminates maintenance and realizes continuous painting of the articles.
The door opening/closing/painting robot is disposed in the upper level of the travel guide rail and the painting robot is disposed in the lower level, so that a door and a trunk are painted with a plurality of robots, which reduces painting time. The door opening/closing/painting robot performs a door opening/closing function and a painting function, so that the number of robots is reduced.
The painting robot, the door opening/closing/painting robot, and the opener robot are disposed on the travel guide rails provided on the side walls of the painting booth in positions facing each other or in positions point-symmetric about the article, and the robots in the facing positions and the robots in the point-symmetric positions respectively operate in synchronization, so that painting time can be reduced.
The painting robot passes under the door opening/closing/painting robot and paints a trunk after the door opening/closing/painting robot has finished painting a door, so that a painting sequence can be optimized and time required for painting an article can be reduced.

### Brief Description of Drawings

[Fig. 1] Fig. 1 is a perspective view of a painting system according to an embodiment of the present invention.
[Fig. 2] Fig. 2 is a perspective view of a door opening/closing/painting robot according to the embodiment of the present invention.
[Fig. 3] Fig. 3 is a perspective view of a wrist of the door opening/closing/painting robot according to the embodiment of the present invention.
[Fig. 4] Fig. 4 is a perspective view of a painting system according to a second embodiment of the present invention.
[Fig. 5] Fig. 5 is a front view of a painting system according to a third embodiment of the present invention.
[Fig. 6] Fig. 6 is a top view of a painting system according to the third embodiment of the present invention.
[Fig. 7] Fig. 7 is a front view of a painting system according to a fourth embodiment of the present invention.
[Fig. 8] Fig. 8 is a top view of a painting system according to the fourth embodiment of the present invention.
[Fig. 9] Fig. 9 is front view of a first example of existing painting systems.
[Fig. 10] Fig. 10 is perspective view of a second example of existing painting systems.

### Reference Numerals

- 1: painting system
- 2: painting booth
- 2a: floor
- 3: travel guide rail
- 4: trunk opener
- 5: door opening/closing/painting robot
- 51: painting gun
- 52: opening/closing means
- 53: fixed base
- 54: first axis
- 55: second axis
- 56: lower arm
- 57: third axis
- 58: upper arm
- 59: wrist
- 5a: common base
- 5b: rotating base
- 5c: rotating base
- 5d: first arm
- 5e: second arm
- 5f: first wrist
- 5g: third arm
- 5h: fourth arm
- 5i: second wrist
- 60: fourth axis
- 61: fifth axis
- 62: sixth axis
- 6: trunk painting robot
- 7: automotive body
- 70: first axis
- 71: second axis
- 72: third axis
- 73: seventh axis
- 74: eighth axis
- 75: ninth axis
- 8: conveyer line
- 91: engine hood
- 92: back trunk
- 10: door
- 11: door opening/closing robot
- 12: painting robot
- 15: door
- 16: travel frame

### Best Modes for Carrying Out the Invention

Hereinafter, embodiments of the present invention are described with reference to the drawings.

### First Embodiment

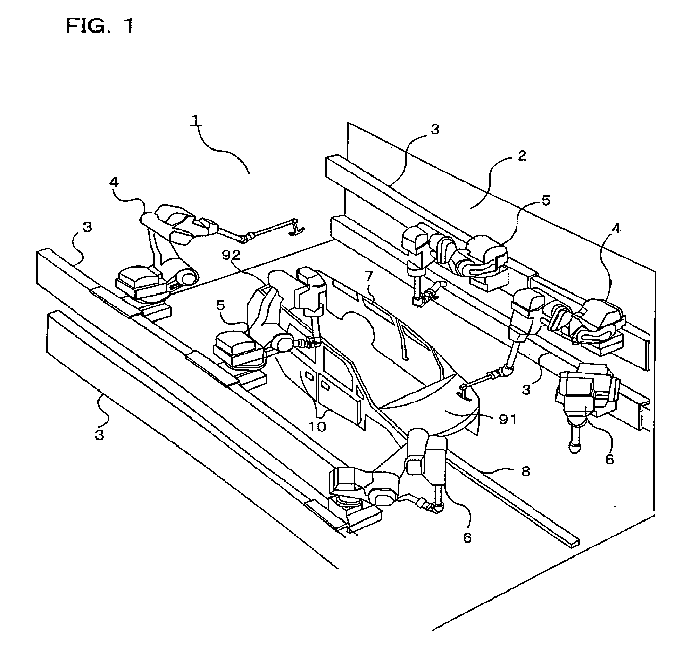

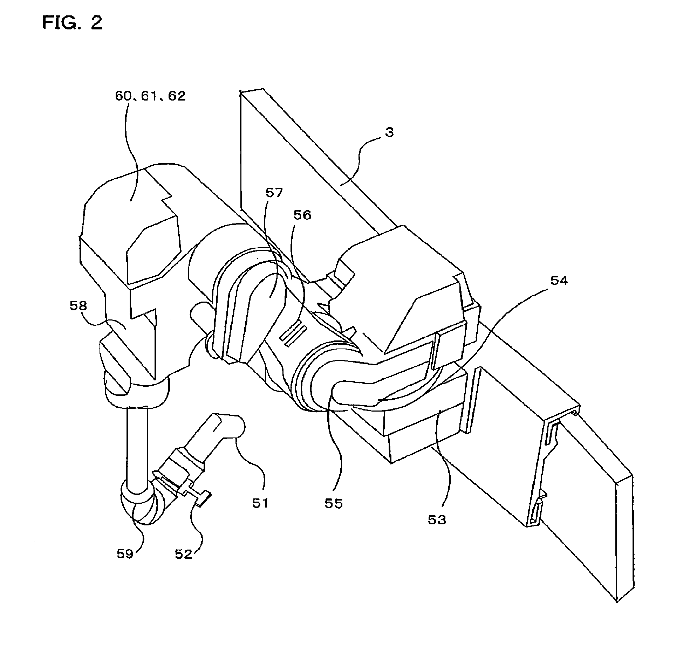

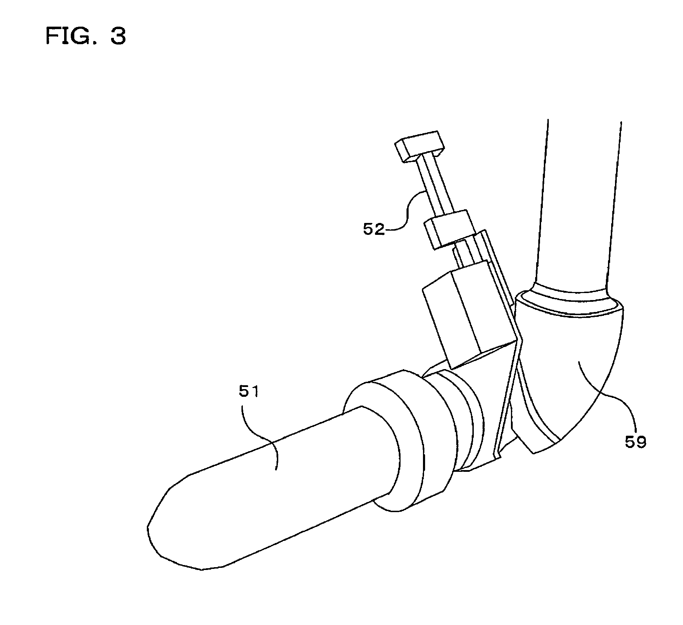

Fig. 1 is a perspective view of a painting system according to the present invention. A painting system 1, a painting booth 2, travel guide rails 3, trunk openers 4, door opening/closing/painting robots 5, trunk painting robots 6, an automotive body 7, and a conveyer line 8 are shown.
The present invention is different from the examples of the existing art in that the trunk openers 4 are disposed on the travel guide rails 3 in an upper level, trunk painting robots 6 are disposed on the travel guide rails 3 in a lower level, the trunk painting robots 6 and the door opening/closing/painting robots 5, which are disposed on both sides with respect to the traveling direction of the automotive body 7, are disposed in positions facing each other, and the trunk openers 4 are disposed in positions point-symmetric about the automotive body 7.
In the painting system 1 of the present invention, the automotive body 7 is mounted on the conveyer line 8, and the travel guide rails 3 are disposed at different heights on side walls of the painting booth 2 on both sides with respect to the traveling direction of the automotive body 7. On the travel guide rail 3 in the upper level of one of the side walls of the painting booth 2, the trunk opener 4 and the door opening/closing/painting robot 5 are movably disposed. On the travel guide rail 3 in the lower level, the trunk painting robot 6 is disposed. On the travel guide rail 3 in the lower level of the other side wall of the painting booth 2, similar robots are disposed. Regarding the disposition of the robots in the upper level of the side walls, the door opening/closing/painting robots 5 are disposed so as to face each other and the trunk openers 4 are disposed alongside the door opening/closing/painting robots 5 so as to be point-symmetric to each other about the automotive body 7. Regarding the disposition of the robots in the lower level of the side walls, the trunk painting robots 6 are disposed so as to face each other. The robots are attached to the travel guide rails 3 via fixed bases. The robots have a similar structure. Referring to Fig. 2, the door opening/closing/painting robot 5 is described as an example of the robots. The door opening/closing/painting robot 5 is attached to the travel guide rail 3 via the fixed base 53. The door opening/closing/painting robot 5 has a first axis 54 rotatable in a horizontal plane of the fixed base 53, a second axis 55 movable perpendicularly to the first axis 54 so as to rotate a lower arm 56, a third axis 57 disposed on an end of the lower arm 56 such that the third axis 57 is movable perpendicularly to the first axis 54 so as to rotate the upper arm 58, and fourth to sixth axes 60 to 62 on which a wrist 59 on an end of the upper arm 58 is freely rotatable. The wrist 59 includes a painting gun 51 and opening/closing means 52. As shown in Fig. 3, the opening/closing means 52 having a hook is attached to the wrist of the door opening/closing/painting robot 5, and the painting gun 51 is attached to an end of the door opening/closing/painting robot 5. With this structure, paint from the painting gun 51 does not adhere to the opening/closing means 52.

The painting process is described using a four-door automotive body 7 as an example. First, the two trunk openers 4 open an engine hood 91 in the front of the automotive body 7 with respect to the traveling direction and a back trunk 92 in the back of the automotive body 7 with respect to the traveling direction, and the two door opening/closing/painting robots 5 open the doors 10 in the front of the automotive body 7.
Next, the two trunk painting robots 6 paint the inside of the engine hood 91 while maintaining the positions facing each other. The two door opening/closing/painting robots 5 paint the inside of the doors 10 while maintaining the positions facing each other.
Next, the two door opening/closing/painting robots 5 close the doors 10. The trunk opener 4 closes the engine hood 91.
Next, the two trunk painting robots 6 move to positions for painting the back trunk 92 while maintaining positions facing each other. At this time, the trunk painting robots 6 pass under the door opening/closing/painting robots 5 without interfering therewith because the robots are disposed so as to avoid such interference.
Next, the two trunk painting robots 6 paint the inside of the back trunk 92 while maintaining positions facing each other. The two door opening/closing/painting robots 5 paint the inside of the doors 10 at the back of the vehicle while maintaining positions facing each other.
Lastly, the two door opening/closing/painting robots 5 close the doors 10 in the back of the vehicle. The trunk opener 4 closes the back trunk 92 so as to complete the painting process, and the robots move to their initial positions.
The positions of the robots are detected with a controller (not shown) in synchronization with the movement of the conveyer line 8 that conveys the automotive body 7, so that the robots move to the painting positions and the door opening/closing positions on the travel guide rails 3.

### Second Embodiment

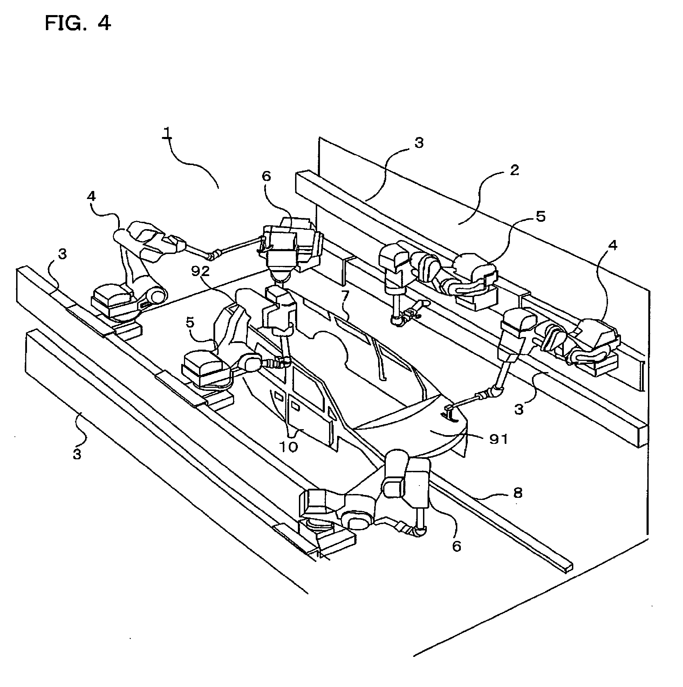

Fig. 4 is a perspective view of a painting system according to a second embodiment. Differences from the first embodiment are described. The invention is different from the first embodiment in that two trunk painting robots 6 are disposed on travel guide rails 3 provided in a lower level on the side walls of a painting booth 2 so as to be point-symmetric about an automotive body 7. Description of the other structures of a painting system 1 is omitted because they are similar to those of the first embodiment.

The painting process is described using a four-door automotive body 7. First, two trunk openers 4 open an engine hood 91 in the front of the automotive body 7 with respect to the traveling direction and a back trunk 92 in the back of the automotive body 7 with respect to the traveling direction, and the two door opening/closing/painting robots 5 open doors 10 in the front of the automotive body 7.
Next, the two trunk painting robots 6 paint a half of the inside of the engine hood 91 and the back trunk 92 while maintaining positions point-symmetric about the automotive body 7. The two door opening/closing/painting robots 5 paint the inside of the doors 10 while maintaining positions facing each other.
Next, the two door opening/closing/painting robots 5 close the doors 10.
Next, the two trunk painting robots 6 move to positions for painting the engine hood 91 and the back trunk 92 while maintaining positions point-symmetric about the automotive body 7. At this time, the trunk painting robots 6 pass under the door opening/closing/painting robots 5 without interfering therewith because the robots are disposed so as to avoid such interference.
Next, the two trunk painting robots 6 paint the remaining half of the inside of the back trunk 92 and the engine hood 91 while maintaining positions point-symmetric about the automotive body 7. The two door opening/closing/painting robots 5 paint the inside of the doors 10 in the back of the vehicle while maintaining positions facing each other.
Lastly, the two door opening/closing/painting robots 5 close the doors 10 in the back. The trunk openers 4 close the back trunk 92 and the engine hood 91, so that the painting process is finished, and the robots move to their initial positions.
The positions of the robots are detected with a controller (not shown) in synchronization with the movement of the conveyer line 8 that conveys the automotive body 7, so that the robots move to painting positions or door opening/closing positions on the travel guide rails 3.

### Third Embodiment

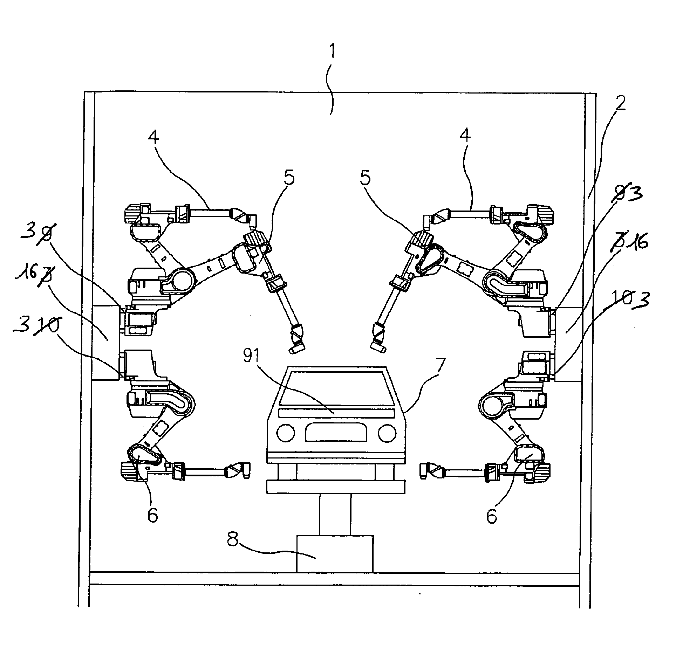

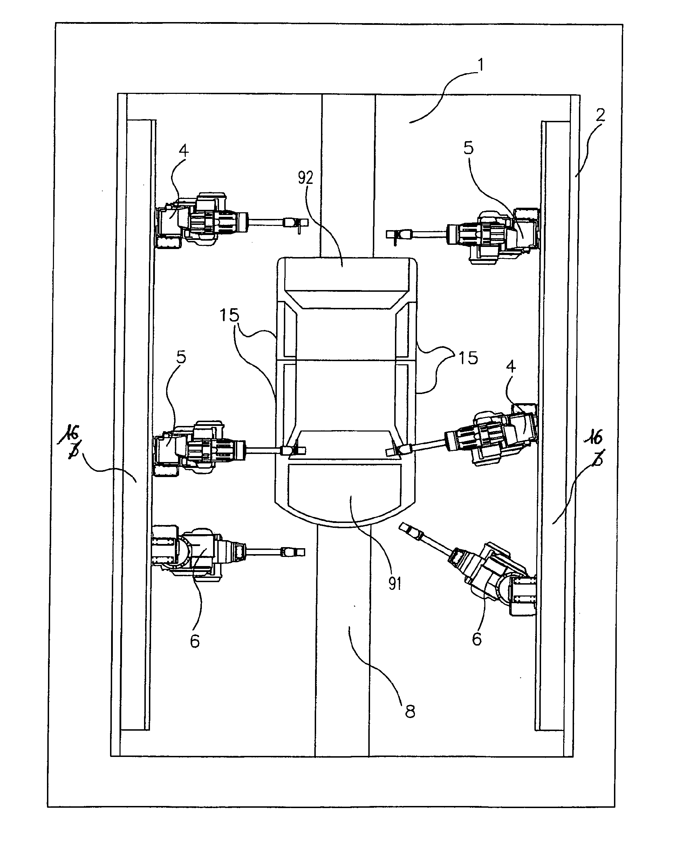

Fig. 5 is a front view of a painting system according to a third embodiment, and Fig. 6 is a top view of the painting system according to the third embodiment. A painting system 1, a painting booth 2, travel frames 16, guide rails 3, trunk openers 4, door opening/closing/painting robots 5, trunk painting robots 6, an automotive body 7, and a conveyer line 8 are shown.
This invention is different from the first embodiment and the second embodiment in that the travel frames 16 are disposed in upper parts of the walls of the painting booth 2. The guide rails 3 are disposed in upper and lower parts of the travel frames 16. The trunk openers 4 are disposed on the travel guide rails 3 in an upper level, and the trunk painting robots 6 are disposed on the travel guide rail 3 in a lower level. The trunk painting robots 6 and the door opening/closing/painting robots 5 are disposed on both sides with respect to the traveling direction of the automotive body 7 in positions facing each other, and the trunk openers 4 are disposed in positions point-symmetric about the automotive body 7. None of the trunk openers 4, the door opening/closing/painting robots 5, and the trunk painting robots 6 is disposed near a floor 2a of the painting booth 2.
In the painting system 1 of the invention, the automotive body 7 is mounted on the conveyer line 8, and the travel frames 16 are disposed in the upper parts (above the upper half of the article to be painted) of the side walls of the painting booth 2 on both sides with respect to the traveling direction of the automotive body 7. The guide rail 3 disposed on the upper part of the travel frame 16, is provided with the trunk opener 4 and the door opening/closing/painting robot 5 which are movably disposed on said guide rail 3 with their arms up. The trunk painting robot 6 is disposed on the travel guide rail 3 disposed on the lower part of the travel frame 16 with its arm down.
In a similar manner, the guide rails 3 are disposed in upper and lower parts of the travel frame 16 on the other side wall of the painting booth 2. The trunk opener 4 and the door opening/closing/painting robot 5 are movably disposed on the guide rail 3 on the upper part of the travel frame 16 with their arms up. The trunk painting robot 6 is disposed on the traveling guide 3 on the lower part of the travel frame 16 with its arm down. Regarding the disposition of the robots in the upper parts of the travel frames 16, the door opening/closing/painting robot 5 are disposed so as to face each other, and the trunk openers 4 are disposed alongside the door opening/closing/painting robots in positions point-symmetric about the automotive body 7. Regarding the disposition of the robots in the lower parts of the travel frame 16, the trunk painting robots 6 are disposed so as to face each other.
Description of the robots is omitted because they are similar to those of the first and second embodiments.

The painting process is described using a four-door automotive body 7. First, the two trunk openers 4 open the engine hood 91 in the front of the automotive body 7 with respect to the traveling direction and the back trunk 92 in the back of the automotive body 7 with respect to the traveling direction, and the two door opening/closing/painting robots 5 open doors 15 on both sides of the front of the automotive body 7.
Next, the two trunk painting robots 6 paint the inside of an engine hood 91 while maintaining positions facing each other. The two door opening/closing/painting robots 5 paint the inside of the doors 15 while maintaining positions facing each other.
Next, the two door opening/closing/painting robots 5 close the doors 15. The trunk opener 4 closes the engine hood 91.
Next, the two trunk painting robots 6 move to the positions for painting the back trunk 92 while maintaining positions facing each other. At this time, the trunk painting robots 6 pass under the door opening/closing/painting robots 5 without interfering therewith, because the robots are disposed so as to prevent such interference.
Next, the two trunk painting robots 6 paint the inside of the back trunk 92 while maintaining positions facing each other. The two door opening/closing/painting robots 5 paint the inside of the doors 15 in the back while maintaining positions facing each other.
Lastly, the two door opening/closing/painting robots 5 close the doors 15 in the back. The trunk opener 4 closes the back trunk 92 so as to finish the painting process, and the robots move to their initial positions.
The positions of the robots are detected with a controller (not shown) in synchronization with the movement of the conveyer line 8 that conveys the automotive body 7, so that the robots move to painting positions or door opening/closing positions on the travel guide rails 3.

### Fourth Embodiment

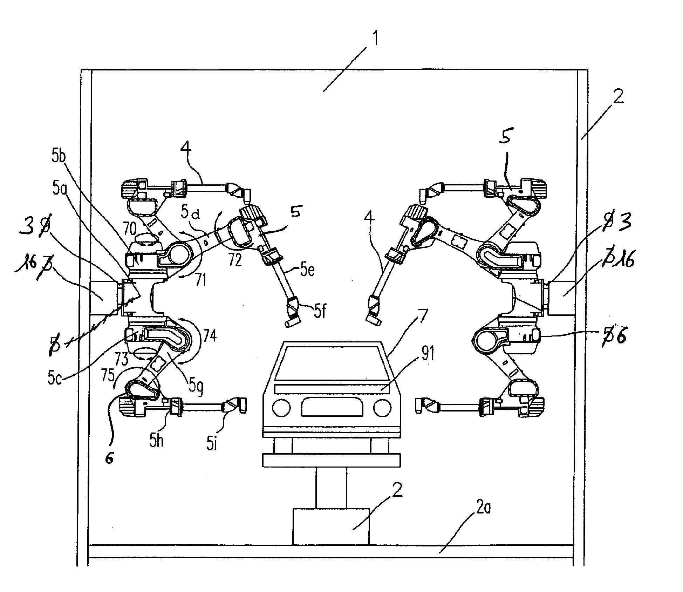

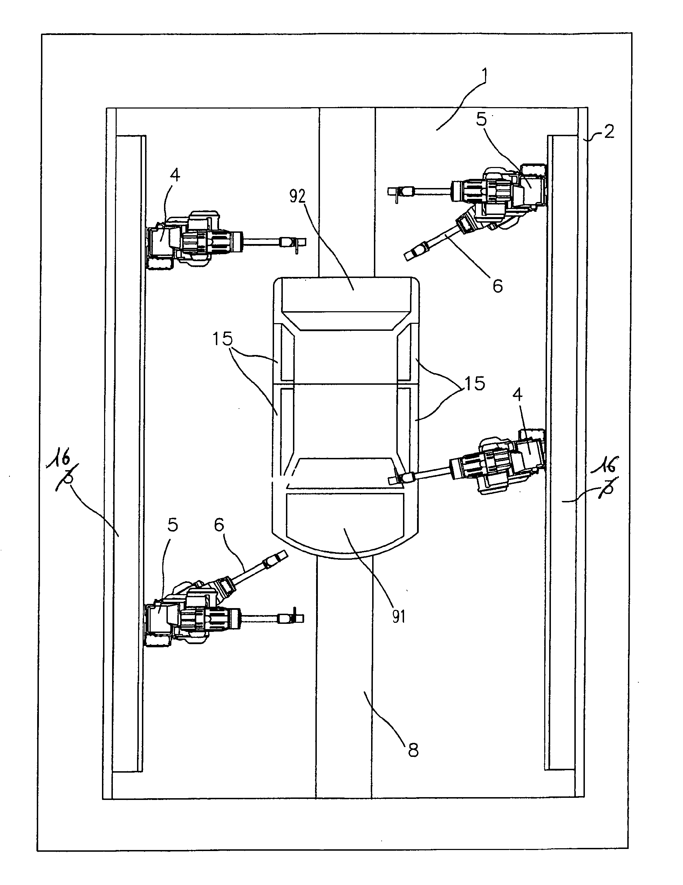

Fig. 7 is a front view of a painting system according to a fourth embodiment, and Fig. 8 is a top view of the painting system according to the fourth embodiment. A painting system 1, a painting booth 2, travel frames 16, guide rails 3, trunk opener robots 4, door-opening/closing/painting and trunk-painting robots 5 and 6, an automotive body 7, and a conveyer line 8 are shown.
This invention is different from the first to third embodiments in that the travel frames 16 are disposed in upper parts of the walls of the painting booth 2, and the guide rails 3 are provided. On the travel guide rails 3, the trunk openers 4 and the door-opening/closing/painting and trunk-painting robots 5 and 6 are disposed. The door-opening/closing/painting and trunk-painting robots 5 and 6 and the trunk openers 4 are disposed on both sides of the automotive body 7 with respect to the traveling direction so as to be point-symmetric about the automotive body 7. None of the trunk openers 4 and the door-opening/closing/painting and trunk-painting robots 5 and 6 is disposed near a floor 2a of the painting booth 2.
In the painting system 1 of the invention, the automotive body 7 is mounted on the conveyer line 8, and the travel frames 16 are disposed in the upper parts (above the upper half of the article to be painted) of the side walls of the painting booth 2 on both sides with respect to the traveling direction of the automotive body. The guide rail 3 is provided on the travel frame 16, and the trunk opener 4 and the door-opening/closing/painting and trunk-painting robots 5 and 6 are movably disposed on the guide rail 3.
In a similar manner, the guide rail 3 is provided on the travel frame 16 on the other side wall of the painting booth 2, and the trunk opener 4 and the door-opening/closing/painting and trunk-painting robots 5 and 6 are movably disposed on the guide rail 3. Regarding the disposition of the robots on the travel frame 16, the trunk openers 4 and the door-opening/closing/painting and trunk-painting robots 5 and 6 are disposed so as to be point-symmetric about the automotive body 7.
The trunk openers 4 are attached to the guide rails 3 via fixed bases provided on the travel frames 16. Description of the robots is omitted because they are similar to those in the first and second embodiments.
The door-opening/closing/painting and trunk-painting robots 5 and 6 have a common base 5a that is attached to the guide rail 9. A first rotating base 5b is attached to the common base 5a so as to be rotatable around a first axis 70 that is vertical. One end of a first arm 5d is attached to the first rotating base 5b so as to be rotatable around a second axis 71 that is horizontal. One end of a second arm 5e is attached to the other end of the first arm 5d so as to be rotatable around a third axis 72 that is parallel to the second axis 71. A first wrist 5f is attached to the other end (fourth to sixth axes are not shown), so that a door opening/closing/painting robot 5 is provided. A second rotating base 5c is attached to the common base 5a so as to be rotatable around a seventh axis 73 that is vertical. One end of a third arm 5g is attached to the second rotating base 5c so as to be rotatable around an eighth axis 74 that is horizontal. One end of a fourth arm 5h is attached to the other end of the third arm 5g so as to be rotatable around a ninth axis 75 that is parallel to the eighth axis 74. To the other end, a second wrist 5i (tenth to twelfth axes are not shown) is attached, so that a trunk painting robot 6 is provided. As shown in Fig. 3, opening/closing means 52 having a hook on its wrist is attached to each of the wrists, and a painting gun 51 is attached to an end of each of the wrists.

The painting process is described using a four-door automotive body 7. First, the two trunk openers 4 open an engine hood 91 in the front of the automotive body 7 with respect to the traveling direction and a back trunk 92 of the automotive body 7 with respect to the traveling direction, and the two door opening/closing/painting robots 5 open doors 15 on both sides in the front of the automotive body 7.
Next, the two trunk painting robots 6 paint the inside of the engine hood 91 and the back trunk 92 in the back, while maintaining their positions point-symmetric about the automotive body. The two door opening/closing/painting robots 5 paint the inside of the doors 15 while maintaining their positions facing each other.
Next, the two door opening/closing/painting robots 5 close the doors 15. The trunk openers 4 close the engine hood 91 and the back trunk 92.
Next, the two door opening/closing/painting robots 5 open the doors 15 in the back of the automotive body 7 and paint the inside of the doors while maintaining their positions facing each other.
Lastly, the two door opening/closing/painting robots 5 close the doors 15 in the back so as to finish the painting process, and the robots move to their initial positions.
The positions of the robots are detected with a controller (not shown) in synchronization with the movement of the conveyer line 8 that conveys the automotive body 7, so that the robots can move to painting positions or door opening/closing positions on the travel guide rails 3.
Heretofore, it has been described that the painting robot and the trunk opener are disposed in positions point-symmetric about the automotive body. However, it is not necessary that the positions be strictly point-symmetric. It is intended that the robots be disposed on opposite sides near the ends of the automotive body. It is sufficient that the positions be substantially point-symmetric, as in a relationship between the back trunk and the engine hood.
In the description of the present invention, painting of the inside of the automotive body is mainly described. However, it is needless to say that a surface of the automotive body can be painted.

### Industrial Applicability

According to the present invention, a painting system for painting an automotive body is described. However, the painting system is applicable to general components and to a sealing system, which has a similar process.

## Claims

1. A painting system for painting an article such as an automotive body (7), the painting system including:
a painting booth (2) that is sealed,
a conveyer (8) for transporting the article through the painting booth,
a first travel guide rail (3) disposed on a side of the conveyer and extending along the conveyer,
a second travel guide rail (3) disposed on a side of the conveyer and extending along the conveyer above the first travel guide rail,
a first painting robot (6) that is mounted on the first travel guide rail (3) to be movable along the first travel guide rail,
**characterized in that** a first opener robot (4) and a first door opening/closing/painting robot (5) are mounted on the second travel guide rail to be movable along the second travel guide rail, while only the painting robot (6) is mounted on the first travel guide rail (3), the first painting robot (6), the first opener robot (4) and the first door opening/closing/painting robot (5) being movable along the first travel guide rail and the second travel guide rail, respectively, without interfering with each other, said first opener robot being configured to open and close a trunk of the automotive body, said first painting robot (6) being configured to paint the trunk, while said first door opening/closing/painting robot is configured to open and close a door of the automotive body and to paint the inside of the door.

2. The painting system according to Claim 1, wherein the first door opening/closing/painting robot (5) is a robot that is capable of making multiple-degree-of-freedom movements and has a wrist axis at an end thereof, a painting gun (51) being mounted on the wrist axis and door opening/closing means (52) being provided to the wrist axis.

3. A painting system according to claim 1 or 2, wherein said painting booth (2) has one side wall and another side wall facing to the one side wall,
the first travel guide rail (3) and the second travel guide rail (3) are provided on the one side wall of the painting booth,
a third travel guide rail (3) extending along the conveyer (8) is provided on the another side wall of the paint booth,
a fourth travel guide rail (3) extending along the conveyer (8) is provided on the another side wall above the third travel guide rail,
a second painting robot (6), which is configured to paint the trunk of the automotive body, is disposed on the third travel guide rail to be movable along the third travel guide rail,
a second door opening/closing/painting robot (5), which is configured to open and close a door of the automotive body and to paint the inside of the door, is disposed on the fourth travel guide rail to be movable along the fourth travel guide rail,
and a second opener robot (4), which is configured to open and close the trunk, is disposed on the fourth travel guide rail to be movable along the fourth travel guide rail.

4. The painting system according to Claim 3, wherein the first door opening/closing/painting robot (5) and the second door opening/closing/painting robot (5) are configured to operate while the first door opening/closing/painting robot and the second door opening/closing/painting robot are positioned to face each other.

5. The painting system according to Claim 1, wherein the first painting robot (6), the first door opening/closing/painting robot (5), and the first opener robot (4) are configured to paint the article while moving in synchronization with a movement speed of the article conveyed on the conveyer (8).

## Patentansprüche

1. Anstreich- bzw. Lackiersystem zum Anstreichen bzw. Lackieren eines Artikels, wie etwa einer Fahrzeugkarosserie (7), wobei das Lackiersystem umfasst:
eine Lackierkabine (2), die abgedichtet ist,
einen Förderer (8) zum Transportierten des Artikels durch die Lackierkabine,
eine erste Wegführungsschiene (3), die auf einer Seite des Förderers angeordnet ist und sich entlang des Förderers erstreckt,
eine zweite Wegführungsschiene (3), die auf einer Seite des Förderers angeordnet ist und sich entlang des Förderers über der ersten Wegführungsschiene erstreckt,
einen ersten Lackierroboter (6), der auf der ersten Wegführungsschiene (3) montiert ist, um entlang der ersten Wegführungsschiene bewegbar zu sein,
**dadurch gekennzeichnet, dass** ein erster Öffnerroboter (4) und ein erster Türöffnungs-/Schließ-/Lackierroboter (5) auf der zweiten Wegführungsschiene montiert sind, um entlang der zweiten Wegführungsschiene bewegbar zu sein, während nur der Lackierroboter (6) auf der ersten Wegführungsschiene (3) montiert ist, wobei der erste Lackierroboter (6), der erste Öffnerroboter (4) und der erste Türöffnungs-/Schließ-/Lackierroboter (5) jeweils entlang der ersten Wegführungsschiene und der zweiten Wegführungsschiene bewegbar sind, ohne einander zu stören, wobei der erste Öffnerroboter aufgebaut ist, um einen Kofferraum der Fahrzeugkarosserie zu öffnen und zu schließen, wobei der erste Lackierroboter (6) aufgebaut ist, um den Kofferraum zu lackieren, während der erste Türöffnungs-/Schließ-/Lackierroboter aufgebaut ist, um eine Tür der Fahrzeugkarosserie zu öffnen und zu schließen, um das Innere der Tür zu lackieren.

2. Lackiersystem nach Anspruch 1, wobei der erste Türöffnungs-/Schließ-/Lackierroboter (5) ein Roboter ist, der fähig ist, Bewegungen mit mehreren Freiheitsgraden zu machen, und eine Handgelenkachse an einem seiner Enden hat, wobei eine Lackierpistole (51) auf der Handgelenkachse montiert ist und das Türöffnungs-/Schließmittel (52) an der Handgelenkachse bereitgestellt ist.

3. Lackiersystem nach Anspruch 1 oder 2, wobei die Lackierkabine (2) eine Seitenwand und eine andere Seitenwand hat, die der einen Seitenwand gegenüber liegt,
wobei die erste Wegführungsschiene (3) und die zweite Wegführungsschiene (3) auf der einen Seitenwand der Lackierkabine bereitgestellt sind,
wobei eine dritte Wegführungsschiene (3), die sich entlang des Förderers (8) erstreckt, auf der anderen Seitenwand der Lackierkabine bereitgestellt ist,
wobei eine vierte Wegführungsschiene (3), die sich entlang des Förderers (8) erstreckt, auf der anderen Seitenwand über der dritten Wegführungsschiene bereitgestellt ist,
wobei ein zweiter Lackierroboter (6), der aufgebaut ist, um den Kofferraum der Fahrzeugkarosserie zu lackieren, auf der dritten Wegführungsschiene angeordnet ist, um entlang der dritten Wegführungsschiene bewegbar zu sein,
wobei ein zweiter Türöffnungs-/Schließ-/Lackierroboter (5), der aufgebaut ist, um eine Tür der Fahrzeugkarosserie zu öffnen und zu schließen und das Innere der Tür zu lackieren, auf der vierten Wegführungsschiene angeordnet ist, um entlang der vierten Wegführungsschiene bewegbar zu sein,
und wobei ein zweiter Öffnerroboter (4), der aufgebaut ist, um den Kofferraum zu öffnen und zu schließe, auf der vierten Wegführungsschiene angeordnet ist, um entlang der vierten Wegführungsschiene bewegbar zu sein.

4. Lackiersystem nach Anspruch 3, wobei der erste Türöffnungs-/Schließ-/Lackierroboter (5) und der zweite Türöffnungs-/Schließ-/Lackierroboter (5) aufgebaut sind, um zu arbeiten, während der erste Türöffnungs-/Schließ-/Lackierroboter und der zweite Türöffnungs-/Schließ-/Lackierroboter so positioniert sind, dass sie einander gegenüber liegen.

5. Lackiersystem nach Anspruch 1, wobei der erste Lackierroboter (6), der erste Türöffnungs-/Schließ-/Lacklerroboter (5) und der erste Öffnerroboter (4) aufgebaut sind, um den Artikel zu lackieren, während sie sich synchron mit einer Bewegungsgeschwindigkeit des auf dem Förderer (8) beförderten Artikels bewegen.

## Revendications

1. Dispositif de peinture destiné à peindre un objet tel qu'une carrosserie automobile (7), le dispositif de peinture comportant :
une cabine de peinture (2) qui est étanche,
un convoyeur (8) destiné à transporter l'objet à travers la cabine de peinture,
un premier rail de guidage de déplacement (3) disposé sur un côté du convoyeur et s'étendant le long du convoyeur,
un deuxième rail de guidage de déplacement (3) disposé sur un côté du convoyeur et s'étendant le long du convoyeur, au-dessus du premier rail de guidage de déplacement,
un premier robot de peinture (6) qui est monté sur le premier rail de guidage de déplacement (3) de manière à pouvoir être déplacé le long du premier rail de guidage de déplacement,
**caractérisé en ce qu'**un premier robot d'ouverture (4) et un premier robot d'ouverture/fermeture/peinture de portière (5) sont montés sur le deuxième rail de guidage de déplacement de manière à pouvoir se déplacer le long du deuxième rail de guidage de déplacement, alors que seul le robot de peinture (6) est monté sur le premier rail de guidage de déplacement (3), le premier robot de peinture (6), le premier robot d'ouverture (4) et le premier robot d'ouverture/fermeture/peinture de portière (5) pouvant être déplacés respectivement le long du premier rail de guidage de déplacement et du deuxième rail de guidage de déplacement, sans interférer l'un avec l'autre, ledit premier robot d'ouverture étant configuré de manière à ouvrir et fermer un coffre de la carrosserie automobile, ledit le premier robot de peinture (6) étant configuré de manière à peindre le coffre alors que ledit premier robot d'ouverture/fermeture/peinture de portière est configuré de manière à ouvrir et fermer une portière de la carrosserie automobile et à peindre l'intérieur de la portière.

2. Dispositif de peinture selon la revendication 1, dans lequel le premier robot d'ouverture/fermeture/peinture de portière (5) est un robot qui permet de réaliser des mouvements avec plusieurs degrés de liberté et présente un axe de poignet à une de ses extrémités, un pistolet de peinture (51) étant monté sur l'axe de poignet et des moyens d'ouverture/fermeture de portière (52) étant agencés sur l'axe de poignet.

3. Dispositif de peinture selon la revendication 1 ou 2, dans lequel ladite cabine de peinture (2) présente une première paroi latérale et une autre paroi latérale faisant face à la première paroi latérale,
le premier rail de guidage de déplacement (3) et le deuxième rail de guidage de déplacement (3) étant agencés sur la première paroi latérale de la cabine de peinture,
un troisième rail de guidage de déplacement (3) s'étendant le long du convoyeur (8) est agencé sur l'autre paroi latérale de la cabine de peinture,
un quatrième rail de guidage de déplacement (3) s'étendant le long du convoyeur (8) est agencé sur l'autre paroi latérale au-dessus du troisième rail de guidage de déplacement,
un second robot de peinture (6), qui est configuré de manière à peindre le coffre de la carrosserie automobile, est agencé sur le troisième rail de guidage de déplacement de manière à pouvoir se déplacer, le long du troisième rail de guidage de déplacement,
un second robot d'ouverture/fermeture/peinture de portière (5), qui est configuré afin d'ouvrir et de fermer une portière de la carrosserie automobile et de peindre l'intérieur de la portière, est disposé sur le quatrième rail de guidage de déplacement de manière à se déplacer le long du quatrième rail de guidage de déplacement,
et un second robot d'ouverture (4) qui est configuré afin d'ouvrir et de fermer le coffre est disposé sur le quatrième rail de guidage de déplacement de manière à pouvoir se déplacer le long du quatrième rail de guidage de déplacement.

4. Dispositif de peinture selon la revendication 3, dans lequel le premier robot d'ouverture/fermeture/peinture de portière (5) et le second robot d'ouverture/fermeture/peinture de portière (5) sont configurés de manière à fonctionner lorsque le premier robot d'ouverture/fermeture/peinture de portière et le second robot d'ouverture/fermeture/peinture de portière sont positionnés l'un face à l'autre.

5. Dispositif de peinture selon la revendication 1, dans lequel le premier robot de peinture (6), le premier robot d'ouverture/fermeture/peinture de portière (5), et le premier robot d'ouverture (4) sont configurés de manière à peindre l'objet tout en se déplaçant de manière synchronisée avec une vitesse de déplacement de l'objet transporté sur le convoyeur (8).
